# EUROPEAN PATENT SPECIFICATION

(11) **EP 3 243 390 B1**
(45) Date of publication and mention of the grant of the patent: **26.12.2018**
(21) Application number: 17000654.8
(22) Date of filing: 18.04.2017
(51) Int. Cl.: A23G 1/18, F28D 7/00

(54) **MODULAR ELEMENT FOR A TEMPERING MACHINE FOR CHOCOLATE AND TEMPERING MACHINE FOR CHOCOLATE**
MODULARES ELEMENT FÜR EINE TEMPERIERMASCHINE FÜR SCHOKOLADE UND TEMPERIERMASCHINE FÜR SCHOKOLADE
ÉLÉMENT MODULAIRE POUR UNE MACHINE DE TREMPE POUR CHOCOLAT ET MACHINE DE TREMPE POUR CHOCOLAT

(30) Priority: 09.05.2016 IT UA20163257
(43) Date of publication of application: 15.11.2017
(73) Proprietor: Chierico, Mario, 12051 Alba (CN) (IT); Chierico, Christian, 12051 Alba (CN) (IT)
(72) Inventor: Chierico, Mario, 12051 Alba (CN) (IT); Chierico, Christian, 12051 Alba (CN) (IT)
(74) Representative: Garavelli, Paolo

(56) References cited:
- EP-A1- 2 976 948
- WO-A1-82/00343
- GB-A- 2 273 980

## Description

The present invention refers to a tempering machine for chocolate and to a modular element for such machine.

Tempering machines for chocolate are known in the art, which perform the tempering of chocolate before pouring liquid chocolate in the dies to obtain a product, which, solidified after a cooling step, for example shaped as tablets, pralines and the like, has an easy un-modelling from the dies, a glossiness and a good shelf capability in time.

Chocolate during its tempering is kept at the temperature of 40-45°C in storage silos and is subjected to a cooling performed gradually to get near the required workability temperature, which changes according to the type of chocolate from 28-29°C to 30-31°C.

Known tempering machines for chocolate note are composed of a series of steel containers called vases, having a hollow space-shaped bottom in which cooling water flows.

The vases can be overlapped with suitable sealing gaskets placed on the circumference, and packaged with suitable tie-rods arranged on lower and upper flanges.

The vases have such a shape as to allow creating a chamber between two adjacent vases in which chocolate is sent through a pump; between a vase and the other, communication holes are arranged, mutually placed at 180 degrees, to create a serpentine path.

In order to allow all chocolate to be in contact with the cooling surface on the vase bottom, a suitable mixing arm, keyed-in on a central shaft, controlled by a motor-reducer, allows mixing chocolate so that it is wholly put in contact with the cooling surface.

A series of solenoid valves controlled by a computer, which detects the chocolate temperature with suitable probes arranged in the piping in which the product slides with an ascending motion, send cooling water to the vases to obtain a gradually decreasing chocolate temperature, till the desired temperature is reached.

Since the mass for chocolate which is between two adjacent vases has a thickness of a few centimetres, in order to make the whole product get in contact with the cooling surface, the action of the mixing arm is indispensable; the number of vases changes according to the machine productivity that has to be obtained, measured in kg/hour of tempered product.

These tempering machines for chocolate have the following drawbacks: a problem is caused by the fact that they have a complex construction and therefore a high cost.

Another problem is that, when it is necessary to empty them to replace the type of chocolate to be tempered, passing for example from milk chocolate to plain chocolate, there are difficulties when cleaning due to their complex shape.

Having to cool down a chocolate thickness of a few centimetres, it is difficult to be able to uniformly cool the whole mass of chocolate.

A further problem of known machines is that, in order to temper a high amount of chocolate, it is necessary to increase the number of vases, with a consequent increase of the machine cost.

Another problem is that known tempering machines for chocolate allows setting a final temperature, but do not allow regulating the temperature in the various process stages.

Another problem of known tempering machines for chocolate is that, at the beginning of work, the machine requires a rather long time to get to steady state, due to the relevant metallic mass which must be cooled.

Object of the present invention is solving the above prior art problems, by providing a tempering machine for chocolate which is simple and inexpensive to make, allows checking the chocolate temperature with accuracy when tempering and allows easily emptying and cleaning it when replacing chocolate inside it.

Another object of the present invention is solving the above prior art problems by providing a modular element for a tempering machine for chocolate which is simple and inexpensive to make, allows checking the chocolate temperature with accuracy when tempering and allows easily emptying and cleaning it when replacing chocolate inside it.

The above and other objects and advantages of the invention, as will result from the following description, are obtained with a tempering machine for chocolate and a modular element for such machine as claimed in the respective independent claims. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

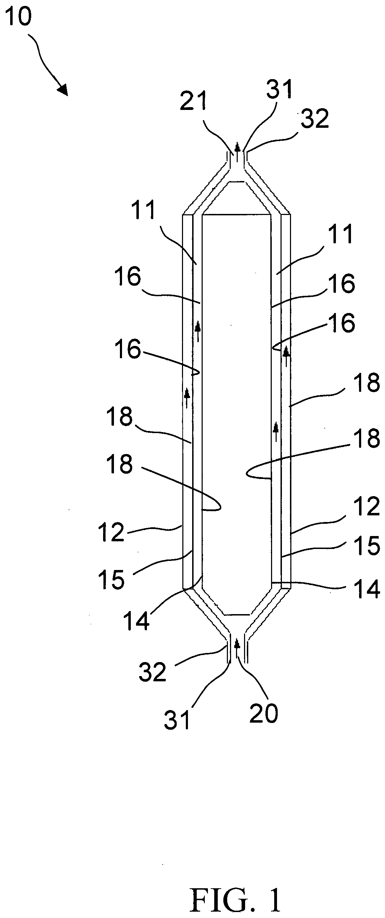

- Figure 1 is a schematic view of an embodiment of a modular element for a tempering machine for chocolate according to the present invention; and
- Figure 2 is a schematic view of an embodiment of a tempering machine for chocolate according to the present invention.

With reference to the Figures, preferred embodiments of the tempering machine for chocolate and of its related modular element of the present invention are shown and described. It will be immediately obvious that numerous variations and modifications (for example related to shape, sizes, arrangements and parts with equivalent functionality) can be made to what is described, without departing from the scope of the invention as appears from the enclosed claims.

With reference to the Figures, it is possible to note that the tempering machine 100 for chocolate of the invention comprises at least one modular element 10, such modular element 10 comprising at least one duct 11 adapted to be crossed by a flow for chocolate to be tempered, such duct 11 being delimited by an internal wall 14 and by an external cooling wall 15, at least one of such walls 14, 15 having a first surface 16 in contact with the flow for chocolate to be tempered and a second surface 18 in contact with a thermal conditioning fluid which flows against it.

The duct 11 of the modular element 10 further comprises at least one inlet duct 20 of chocolate and at least one outlet duct 21 of chocolate, also delimited by cooling walls in contact with the thermal conditioning fluid, to keep the chocolate inside the ducts 20, 21 at the desired tempering temperature.

The internal wall 14 and the external wall 15 of the duct 11 are side walls of the duct 11 itself and they are vertical walls and flow of chocolate vertically slides inside the duct 11 itself pushed by at least one pump 25 of a known type connected to the inlet duct 20; preferably, the distance between the internal wall 14 and the external wall 15 is much less than the length of the walls 14, 15 so that chocolate which flows inside the duct 11 has a thickness of few millimetres.

In the preferred embodiment of the tempering machine 100 for chocolate of the invention shown in the Figures, the modular element 10 is a column composed of three concentric pipes 12, 14 and 15, and the duct 11 is made in the space included between the internal pipe 14 and the second pipe 15, while the thermal conditioning fluid, for example composed of water, flows in the internal pipe 14 and in the volume included between the second pipe 15 and the external tube 12.

The inlet duct 20 and the outlet duct 21 of chocolate are further formed of two concentric pipes 31, 32 between which the cooling fluid flows.

Preferably, on the external surface of the internal pipe 14 on which the chocolate to be tempered is adapted to slide flow-contrasting elements are made, for example wings, to improve the thermal exchange by modifying the flow of chocolate ensuring the contact with the cooling walls.

The tempering machine 100 for chocolate of the invention can obviously also comprise a plurality modular elements 10, 10a connected in series through a duct 22 for the transport of the chocolate which connects the outlet duct 21 of a modular element 10 with the inlet duct 20 of the following modular element 10a; preferably, the modular elements 10, 10a are vertically assembled, with the inlet duct 20 of the first element 10 placed below the outlet duct 21, while the second element 10a has the inlet duct 20 which is above the outlet duct 21.

Preferably, each modular element 10 comprises a probe 26 installed in the duct 11 next to the outlet duct 21 of chocolate, adapted to measure the chocolate temperature and set the desired temperature, to control a solenoid valve 27 connected to a piping 35, 36 of the cooling fluid to circulate in the modular element 10 the cooling fluid necessary to obtain the set chocolate temperature, at the outlet of each modular element 10 of the machine 100; preferably the solenoid valve 27 is controlled by a computer connected to the probe 26.

The thermal conditioning fluid is preferably composed of a heating fluid, which is at a higher temperature, and of a cooling fluid, which is at a lower temperature.

The tempering machine 100 for chocolate of the invention comprises a piping 35 for circulating the heating fluid, with a delivery piping 35a and a return piping 35b, and a piping 36 for circulating the cooling fluid, with a delivery piping 36a and a return piping 36b; for example the piping 35 for circulating the heating fluid contains water at 45 °C and the piping 36 for circulating the cooling fluid contains water at a temperature ranging from 15 °C to 20 °C; the delivery piping 35a of the heating fluid is connected to the internal pipe 14 of the first modular element 10 through the solenoid valve 27, while solenoid valves 27a, 27b connect the following modular elements 10a, 10b with the delivery piping 36a of the cooling fluid.

The tempering machine 100 for chocolate of the invention further comprises exhaust valves 28, preferably with three ways, which allow exhausting the thermal conditioning fluid in the return piping 35b and 36b, a product-loading valve 38 connected to the inlet duct 20 of chocolate of the first modular element 10 and product unloading valves 39 connected to the inlet duct 20 or to the discharge duct 21 of chocolate which are in the lower part of the modular elements 10; the pump 25 is assembled downstream of the product unloading valve 38 and upstream of the inlet duct 20 of chocolate in the first modular element 10.

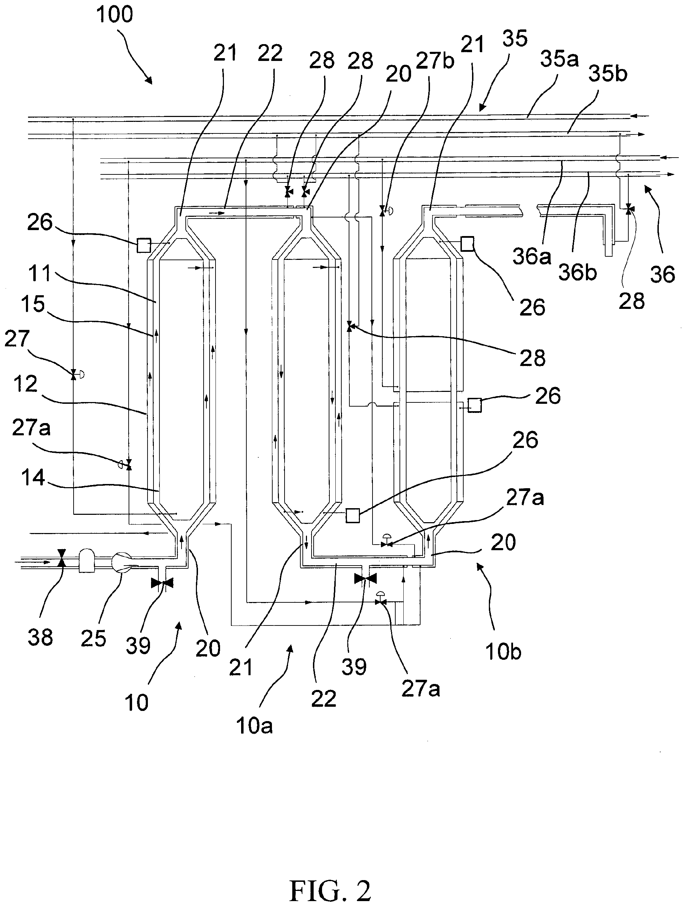

Figure 2 shows an example of a tempering machine 100 for chocolate of the invention having three modular elements 10, 10a and 10b connected in series through ducts 22 for the transport of chocolate which connect the outlet duct 21 of a modular element 10, 10a with the inlet duct 20 of the following modular element 10a, 10b; the modular elements 10, 10a, 10b are vertically assembled so that chocolate flows with an ascending motion in the duct 11 of the first and of the third modular element 10, 10b, while it will have a descending motion in the duct 11 of the second modular element 10a.

The operation of the embodiment of the tempering machine 100 for chocolate according to the present invention shown in Figure 2 will now be described.

When tempering is not performed, the machine 100 can be brought in heating mode, in which chocolate is kept at the temperature of about 45°C of the heating fluid.

In this heating mode, the solenoid valves 27a, 27b which connect the second and third modular elements 10a, 10b with the delivery piping 36a of the cooling fluid are closed, while the solenoid valve 27 for connecting the delivery piping 35a of the heating fluid with the internal pipe 14 of the first modular element 10 is open, thereby circulating the hot fluid in all modular elements 10, 10a, 10b and in the space between the concentric pipes of the ducts 20, 21, 22, while the three-way discharge valves 28 are open, to allow discharging the hot fluid in the return piping 35b.

Before starting to temper a hot machine, it is advisable to circulate chocolate by actuating the pump 25, checking that the same normally arrives at discharge.

At the beginning of the tempering step, both the solenoid valves 27a, 27b which connect the second and third modular element 10a, 10b with the delivery piping 36a of the cooling fluid, and the three-way unloading valves 28 to discharge fluid in the return piping 36b of the cooling fluid are opened, while the solenoid valve 27 is closed.

The probes 26 installed in the chambers 11 of the modular elements 10, 10a, 10b next to the outlet ducts 21 of chocolate, already pre-set at the desired temperatures, control opening and closing of the solenoid valves 27, 27a, 27b to keep the desired temperature in every modular element 10, 10a, 10b; preferably the probes 26 and the solenoid valves 27, 27a, 27b are controlled by a computer.

Preferably, the last modular element 10b is divided into two parts, since, for a correct tempering, it is advisable to raise the chocolate temperature by one or two degrees higher than the working temperature, to lower it in the second part of the element, withdrawing water from the discharge piping of the second modular element 10a.

For machines with higher flow-rate, the whole last-but-one modular element will be dedicated to such purpose.

If necessary, the valves 39 allow the complete discharge of the product at the end of working, with the machine kept in the above described heating mode.

Advantageously, the tempering machine 100 for chocolate of the invention allows tempering a layer of chocolate of a few millimeters, obtaining a high quality and homogeneity of the product.

Moreover, due to the probes 26 installed as output from the modular elements 10, the temperature in the various process stages can be controlled and modified.

Advantageously, the product unloading valves 39 placed below the modular elements 10 allow the complete discharge of the product when heating, allowing to use the same machine for different types of chocolate with easiness, without requiring complex operations for emptying the machine.

Another advantage is given by the readiness of putting the machine in steady state at the beginning of working.

Moreover, the absence of the powerful motor-reducer which allows shaking chocolate in traditional machines, allows high energy savings, a lower building cost of the machine and removes the need for maintenance.

## Claims

1. Modular chocolate-tempering element (10) for a tempering machine (100) for chocolate comprising at least one duct (11) adapted to be crossed by a flow of chocolate to be tempered, the duct (11) being delimited by an internal wall (14) and by an external cooling wall (15), at least one of such walls (14, 15) having a first surface (16) in contact with the flow for chocolate to be tempered and a second surface (18) in contact with a thermal conditioning fluid which flows against it, said duct (11) comprising at least one inlet duct (20) of chocolate and at least one outlet duct (21) of chocolate, also delimited by cooling walls in contact with the thermal conditioning fluid, to keep the chocolate inside the ducts (20, 21) at the desired tempering temperature, **characterized in that** the internal wall (14) and the external wall (15) of the duct (11) are vertical side walls and the flow for chocolate vertically slides inside the duct (11) pushed by at least one pump (25) connected to the inlet duct (20).

2. Modular chocolate-tempering element (10) according to claim 1, **characterized in that** the modular chocolate-tempering element (10) is a column composed of three concentric pipes (12, 14, 15), and the duct (11) is made in a space included between an internal pipe (14) and a second pipe (15), while the thermal conditioning fluid is adapted to slide in the internal pipe (14) and in the volume included between the second pipe (15) and an external tube (12).

3. Modular chocolate-tempering element (10) according to any one of the previous claims, **characterized in that** it comprises flow-contrasting elements made on the external surface of the internal pipe (14), on which chocolate to be tempered is adapted to flow to improve the thermal exchange, modifying the flow of chocolate ensuring the contact with the cooling walls.

4. Tempering machine (100) for chocolate comprising at least one modular chocolate-tempering element (10) according to any one of the previous claims.

5. Tempering machine (100) for chocolate according to the previous claim, **characterized in that** it comprises a plurality of such modular chocolate-tempering elements (10, 10a) connected in series through a duct (22) for the transport of chocolate which connects the outlet duct (21) of a modular chocolate-tempering element (10) with the inlet duct (20) of the following modular chocolate-tempering element (10a).

6. Tempering machine (100) for chocolate according to claim 5, **characterized in that** the modular chocolate-tempering elements (10, 10a) are vertically assembled, with the inlet duct (20) of the first modular chocolate-tempering element (10) placed below the outlet duct (21), while the second modular chocolate-tempering element (10a) has the inlet duct (20) above the outlet duct (21).

7. Tempering machine (100) for chocolate according to claim 5 or 6, **characterized in that** the modular chocolate-tempering element (10, 10a) comprises a probe (26) installed in the duct (11) next to the outlet duct (21) of chocolate, said probe (26) being adapted to measure the chocolate temperature and set the desired temperature, to control a solenoid valve (27) connected to a piping (35, 36) of the thermal conditioning fluid to circulate in the modular chocolate-tempering element (10, 10a) the thermal conditioning fluid necessary to obtain the set chocolate temperature.

8. Tempering machine (100) for chocolate according to any one of claims 4 to 7, **characterized in that** it comprises a piping (35) for circulating a heating fluid with a delivery piping (35a) and a return piping (35b), and a piping (36) for circulating a cooling fluid with a delivery piping (36a) and a return piping (36b), the delivery piping (35a) of the heating fluid being connected to the first modular chocolate-tempering element (10) through the solenoid valve (27) and the delivery piping (36a) of the cooling fluid being connected through solenoid valves (27a, 27b) with the following modular chocolate-tempering elements (10a, 10b).

9. Tempering machine (100) for chocolate according to any one of claims 4 to 8, **characterized in that** it comprises three modular chocolate-tempering elements (10, 10a, 10b) connected in series through ducts (22) for the transport of chocolate which connect the outlet duct (21) of a modular chocolate-tempering element (10, 10a) to the inlet duct (20) of the following modular chocolate-tempering element (10a, 10b), and **in that** the modular chocolate-tempering elements (10, 10a, 10b) are vertically assembled so that chocolate flows with an ascending motion in the duct (11) of the first and of the third modular chocolate-tempering element (10, 10b) while it will have a descending motion in the duct (11) of the second modular chocolate-tempering element (10a).

## Patentansprüche

1. Modulares Element (10) für das Temperieren von Schokolade für ein Schokolade-Temperiergerät (100), welches mindestens eine Leitung (11) enthält, durch welche die zu temperierende Schokolade fließen kann, wobei die Leitung (11) durch eine Innenwand (14) und eine Abkühlungsaußenwand (15) eingegrenzt ist und wobei mindestens eine dieser Wände (14, 15) eine erste Oberfläche (16) hat, die mit dem zu temperierenden Schokoladenfluss in Berührung ist, und eine zweite Oberfläche (18) in Berührung mit der darin fließenden, thermischen Klimatisierungsflüssigkeit. Die besagte Leitung (11) umfasst mindestens eine Eingangsleitung (20) für die Schokolade und mindestens eine Ausgangsleitung (21) für die Schokolade, welche ebenfalls durch gekühlte Wände in Berührung mit der thermischen Klimatisierungsflüssigkeit begrenzt sind, damit die Schokolade im Inneren der Leitungen (20, 21) die gewünschte Temperierungstemperatur beibehält, **gekennzeichnet durch** die Tatsache, dass die Innenwand (14) und die Außenwand (15) der Leitung (11) Seitenwände sind und dass die Schokolade senkrecht in der Leitung (11) fließt, angetrieben durch wenigstens eine Pumpe (25), die mit der Eingangsleitung (20) verbunden ist.

2. Modulares Element (10) für das Temperieren von Schokolade gemäß Patentanspruch 1, **gekennzeichnet durch** die Tatsache, dass das modulare Element (10) für das Temperieren von Schokolade eine aus drei gleichmittigen Rohren (12, 14, 15) bestehende Säule ist, und dass die Leitung (11) sich in dem Raum zwischen einem Innenrohr (14) und einem zweiten Rohr (15) befindet, während die thermische Klimatisierungsflüssigkeit in einem Innenrohr (14) und in dem Volumen zwischen dem zweiten Rohr (15) und einem Außenrohr (12) fließt.

3. Modulares Element (10) für das Temperieren von Schokolade gemäß einem beliebigen, vorherigen Patentanspruch, **gekennzeichnet durch** die Tatsache, dass es auch Flusskontrastelemente enthält, die sich auf der Außenfläche des Innenrohrs (14) befinden, in dem die zu temperierende Schokolade fließt, für Verbesserung des Wärmeaustauschs, unter Veränderung des Schokoladenflusses und Verbesserung der Berührung mit den Kühlwänden.

4. Temperiergerät (100) für Schokolade, das wenigstens ein modulares Element (10) für das Temperieren von Schokolade gemäß einem beliebigen vorherigen Patentanspruch enthält.

5. Temperiergerät (100) für Schokolade, gemäß dem vorherigen Patentanspruch, **gekennzeichnet durch** die Tatsache, dass es eine Mehrzahl an den besagten modularen Elementen (10, 10a) für das Temperieren von Schokolade enthält, die in Reihe durch eine Leitung (22) für den Transport der Schokolade verbunden sind, welche die Ausgangsleitung (21) eines modularen Elements (10) für das Temperieren von Schokolade mit der Eingangsleitung (20) des darauffolgenden, modularen Elements (10a) für das Temperieren der Schokolade verbindet.

6. Temperiergerät (100) für Schokolade, gemäß Patentanspruch 5, **gekennzeichnet durch** die Tatsache, dass die modularen Elemente (10, 10a) für das Temperieren der Schokolade senkrecht angeordnet sind, mit der Eingangsleitung (20) des ersten, modularen Elements (10) für das Temperieren der Schokolade unter der Ausgangsleitung (21), während beim zweiten, modularen Element (10a) für das Temperieren der Schokolade die Eingangsleitung (20) über der Ausgangsleitung (21) liegt.

7. Temperiergerät (100) für Schokolade, gemäß den vorherigen Patentansprüchen 5 oder 6, **gekennzeichnet durch** die Tatsache, dass das modulare Element (10, 10a) für das Temperieren der Schokolade eine Sonde (26) umfasst, die auf der Leitung (11) nahe der Ausgangsleitung (21) der Schokolade montiert ist. Diese Sonde (26) dient für die Messung der Schokoladentemperatur und Einstellung der gewünschten Temperatur, für Steuerung eines Elektroventils (27), das mit einem Rohr (35, 36) der thermischen Klimatisierungsflüssigkeit verbunden ist, damit im modularen Element (10, 10a) für Temperieren der Schokolade die thermische Klimatisierungsflüssigkeit fließen kann, die notwendig ist, um die für die Schokolade eingestellte Temperatur zu erhalten.

8. Temperiergerät (100) für Schokolade, gemäß einem beliebigen, vorherigen Patentanspruch 6 bis 7, **gekennzeichnet durch** die Tatsache, dass es auch ein Rohr (35) für den Kreislauf einer Erhitzungsflüssigkeit umfasst, mit einem Zuflussrohr (35a) und einem Rückflussrohr (35b), und ein Rohr (36) für den Kreislauf einer Kühlflüssigkeit mit einem Zuflussrohr (36a) und einem Rückflussrohr (36b), wobei das Zuflussrohr (35a) der Erhitzungsflüssigkeit mit dem ersten, modularen Element (10) verbunden ist, um die Schokolade mittels Elektroventil (27) zu temperieren, und das Zuflussrohr (36a) der Kühlflüssigkeit mittels Elektroventilen (27a, 27b) mit den nachfolgenden modularen Elementen (10a, 10b) für Temperieren der Schokolade.

9. Temperiergerät (100) für Schokolade, gemäß einem beliebigen, vorherigen Patentanspruch von 4 bis 8, **gekennzeichnet durch** die Tatsache, dass es auch drei modulare Elemente (10, 10a, 10b) für das Temperieren von Schokolade enthält, die in Reihe durch Leitungen (22) für den Transport der Schokolade verbunden sind, welche die Ausgangsleitung (21) eines modularen Elements (10, 10a) für das Temperieren der Schokolade mit der Eingangsleitung (20) des darauf folgenden modularen Elements (10a, 10b) für das Temperieren von Schokolade verbinden, sowie durch die Tatsache, dass die modularen Elemente (10, 10a, 10b) für das Temperieren von Schokolade senkrecht montiert sind, die damit in der Leitung (11) des ersten und dritten, modularen Elements (10, 10b) für Temperieren von Schokolade steigt, dagegen aber in der Leitung (11) des zweiten, modularen Elements (10a) für das Temperieren von Schokolade abfällt.

## Revendications

1. Elément modulaire (10) pour tempérer le chocolat pour une tempéreuse à chocolat (100) comprenant une conduite (11) apte à être traversée par un flux de chocolat à tempérer, la conduite (11) est délimitée par une paroi interne (14) et une paroi externe (15) de refroidissement ; au moins l'une de ces parois (14, 15) possède une première surface (16) au contact du flux de chocolat à tempérer et une seconde surface (18) au contact d'un fluide de conditionnement thermique qui coule sur celle-ci ; la conduite (11) comprend au moins une conduite d'entrée (20) du chocolat et une conduite de sortie (21) du chocolat, délimitées elles aussi par des parois de refroidissement au contact du fluide de conditionnement thermique pour maintenir le chocolat à l'intérieur des conduites (20, 21) à la température de tempérage voulue ; **caractérisé en ce que** la paroi interne (14) et la paroi externe (15) de la conduite (11) sont des parois latérales et le flux de chocolat coule verticalement à l'intérieur de la conduite (11) poussé au moins par une pompe (25) reliée à la conduite d'entrée (20).

2. Elément modulaire (10) pour tempérer le chocolat selon la revendication 1, **caractérisé en ce que** l'élément modulaire (10) pour tempérer le chocolat est une colonne formée par trois tubes concentriques (12, 14, 15) et la conduite (11) est réalisée dans un espace compris entre un tube interne (14) et un second tube (15), tandis que le fluide de conditionnement thermique est apte à couler dans le tube interne (14) et dans le volume compris entre le second tube (15) et un tube externe (12).

3. Elément modulaire (10) pour tempérer le chocolat selon l'une des revendications précédentes, **caractérisé en ce qu'**il comprend des éléments de contraste de flux réalisés sur la surface externe du tube interne (14) où coule le chocolat à tempérer pour améliorer l'échange thermique, en modifiant le flux du chocolat en assurant son contact avec les parois de refroidissement.

4. Tempéreuse à chocolat (100) comprenant au moins un élément modulaire (10) pour tempérer le chocolat selon l'une des revendications précédentes.

5. Tempéreuse à chocolat (100) selon la revendication précédente, **caractérisée en ce qu'**elle comprend une pluralité d'éléments modulaires (10, 10a) pour tempérer le chocolat reliés en série à travers une conduite (22) pour le transport du chocolat qui relie la conduite de sortie (21) d'un élément modulaire (10) pour tempérer le chocolat à la conduite d'entrée (20) de l'élément modulaire (10a) pour tempérer le chocolat successif.

6. Tempéreuse à chocolat (100) selon la revendication 5, **caractérisée en ce que** les éléments modulaires (10, 10a) pour tempérer le chocolat sont montés verticalement, avec la conduite d'entrée (20) du premier élément modulaire (10) pour tempérer le chocolat placée au bas de la conduite de sortie (21), tandis que le second élément modulaire (10a) pour tempérer le chocolat possède la conduite d'entrée (20) située au dessus de la conduite de sortie (21).

7. Tempéreuse à chocolat (100) selon la revendication 5 ou 6, **caractérisée en ce que** l'élément modulaire (10, 10a) pour tempérer le chocolat comprend une sonde (26) installée dans la conduite (11) à proximité de la conduite de sortie (21) du chocolat ; la sonde (26) permet de mesurer la température du chocolat et de programmer la température voulue, pour commander une électrovanne (27) reliée à une tubulure (35, 36) du fluide de conditionnement thermique afin de faire circuler dans l'élément modulaire (10, 10a), servant à tempérer le chocolat, le fluide de conditionnement thermique nécessaire pour obtenir la température programmée du chocolat.

8. Tempéreuse à chocolat (100) selon l'une des revendications de 4 à 7, **caractérisée en ce qu'**elle possède une tubulure (35) pour la circulation d'un fluide de chauffage avec une tubulure de refoulement (35a) et une tubulure de retour (35b), ainsi qu'une tubulure (36) pour la circulation d'un fluide de refroidissement avec une tubulure de refoulement (36a) et une tubulure de retour (36b) ; la tubulure de refoulement (35a) du fluide de chauffage est reliée au premier élément modulaire (10) pour tempérer le chocolat à travers l'électrovanne (27) et la tubulure de refoulement (36a) du fluide de refroidissement est reliée à travers des électrovannes (27a, 27b) aux éléments modulaires (10a, 10b) pour tempérer le chocolat successif.

9. Tempéreuse à chocolat (100) selon l'une des revendications de 4 à 8, **caractérisée en ce qu'**elle possède trois éléments modulaires (10, 10a, 10b) pour tempérer le chocolat reliés en série à l'aide de conduites (22) pour le transport du chocolat qui relient la conduite de sortie (21) d'un élément modulaire (10, 10a) pour tempérer le chocolat à la conduite d'entrée (20) de l'élément modulaire (10a, 10b) pour tempérer le chocolat successif, et **en ce que** les éléments modulaires (10, 10a, 10b) pour tempérer le chocolat sont montés verticalement de sorte que le chocolat coule avec un mouvement ascensionnel dans la conduite (11) du premier et du troisième élément modulaire (10, 10b) pour tempérer le chocolat alors qu'il suivra un mouvement descendant dans la conduite (11) du second élément modulaire (10a) pour tempérer le chocolat.
